# EUROPEAN PATENT APPLICATION

(11) **EP 1 837 577 A1**
(43) Date of publication of application: **26.09.2007**
(21) Application number: 05708103.6
(22) Date of filing: 14.01.2005
(51) Int. Cl.: F16L 21/04

(54) **GASKET**

(71) Applicant: Belgicast Internacional, s.l.u., 48100 Munguia, Vizcaya (ES)
(72) Inventor: AZPIAZU NUÑEZ, Jose Antonio, E-48100 MUNGUIA (VIZCAYA) (ES)
(74) Representative: Esteban Perez-Serrano, Maria Isabel
(86) International application number: PCT/ES2005/070005
(87) International publication number: WO 2006/075037

(57) **Abstract**

The present invention relates to a fluid-tight joint intended to implement a fluid-tight seal in the coupling of two pipes which it is desired to connect. The joint is constituted by two bodies one of which has a wedge-shaped surface, and connected by a throttling neck which is deformed by pressure. The wedge-shaped body is deformed and increases the surface supporting the joint against the pipe assuring the fluid-tightness.

## Description

### OBJECT OF THE INVENTION

The present invention relates to a fluid-tight joint intended to form a fluid-tight seal, mainly in the coupling of two pipes which it is desired to join although it is applicable to other types of seal.

The present invention is characterized in that the joint is constituted by two bodies, one of them with a wedge-shaped surface, and connected by a throttling neck which is deformed by pressure. The pressure also deforms the wedge-shaped body, increasing the surface of the joint supported against the pipe and assuring the fluid-tightness. The fluid-tightness is also enhanced since the joint is deformed by the pressure which the fluid exercises against the joint.

### BACKGROUND OF THE INVENTION

Fluid-tight joints are known in the state of the art intended to implement a fluid-tight seal in the coupling between pipes which it is desired to join and which do not necessarily have to be of the same diameter.

An example is the patent EP0709612 which refers to the coupling between two pipes. The coupling which is described in the aforementioned patent is intended to implement a join between pipes with flat ends and abutting or with the ends slightly separated. The diameters of these pipes need not be the same. The main responsibility for the seal and the fluid-tightness of the coupling rests on two wedge-shaped joints which rest on the flat surface of the pipe and on a sleeve which connects the two flanges of the coupling.

In general, it can be said that by increasing the surface of abuttal of the fluid-tight joint with the surface of the pipe, the assurance is increased of the fluid-tight seal.

With the present invention it is sought to improve the fluid-tightness of the seals or couplings between pipes by increasing the contact area and favouring the wedging of the segment which provides support between the joint and the pipe where it is desired to assure the fluid-tightness.

### DESCRIPTION OF THE INVENTION

The present invention consists of a fluid-tight joint for implementing a fluid-tight seal. This joint is intended mainly to guarantee fluid-tightness in the coupling between two pipes which it is desired to connect, and which do not necessarily have the same diameter, although it can be used in any other coupling or seal that requires fluid-tightness.

The fluid-tight joint to which the present document refers is characterized in that it is a ring which is constituted by two bodies which are connected by a throttling neck.

One of these bodies has a supporting surface which is essentially perpendicular to its axis, against which a tightening force is applied to achieve the deformation of the joint and thereby guarantee fluid-tightness.

This first body has another surface intended to rest on a projection, of a tightening body, to prevent the joint from escaping.

The second body that constitutes the joint has an oblique surface for wedging by abuttal on the internal surface of the main body of the device which constitutes the seal. When tightening the seal this second body is deformed and abuts on the external surface of the pipe guaranteeing fluid-tightness. This body can also be deformed by the pressure applied by the fluid, which is between the main body of the device and the pipe, likewise contributing to improving fluid-tightness.

Both bodies of the joint are connected through a throttling neck which is also deformed by applying pressure on the coupling.

### DESCRIPTION OF THE DRAWINGS

The present descriptive specification is completed with a set of drawings, which illustrate but in no way restrict the preferred embodiment of the invention.

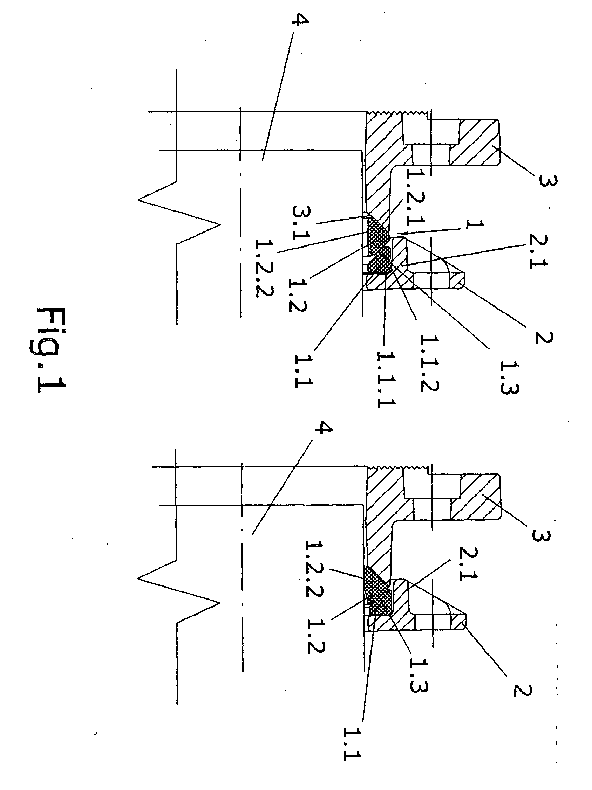

Figure 1 shows a sequence of the fluid-tight seal with no tightening force applied and with this in the operating mode.

### DETAILED EXPLANATION OF VARIOUS MODES OF EMBODIMENT

Figure 1 shows a sequence of the coupling on a pipe (4). In the first drawing the joint (1) is observed without deforming and in the second the joint (1) is now deformed by the pressure applied in the coupling.

As can be observed in the sole figure, the fluid-tight joint (1) is formed by two bodies which will be termed the first body (1.1) and the second body (1.2) and a throttling neck (1.3) which connects them.

In this example, the joint (1) is a ring which is mounted between a tightening flange (2) and the main body (3) of the device on which the fluid-tight seal will be established, the joint (1) applying the peripheral seal on the pipe.

The first body (1.1) of the fluid-tight joint (1) has a supporting surface (1.1.1) essentially perpendicular to the axis of the pipe (4). This supporting surface (1.1.1) of the first body (1.1) rests on the internal surface of the flange (2) to which a force is applied, by means of a tightening means such as bolts for example, not shown.

Due to the tension established by the tightening means the flange (2) is brought closer to the main body (3) with the consequent deformation of the fluid-tight joint (1) as is described later.

Another of the surfaces (1.1.2) of the first body, abuts upon a projection (2.1) of the flange (2) thereby impeding the fluid-tight joint (1) from escaping from its housing.

The second body (1.2) of the fluid-tight joint (1) has an oblique surface (1.2.1) for the wedging thereof through the pressure applied by the corresponding internal surface (3.1) of the main body (3).

The fluid-tight seal is produced in the following way. In a first phase, the joint (1) without deforming rests on the internal surface of the flange (2). At this point, the second body (1.2) of the joint (1) does not yet rest on the external surface of the pipe (4), as can be seen in the first drawing of figure 1.

Later, when a force is applied through the corresponding tightening means on the flange (2), to bring it closer to the coupling element (3), a deformation of the second body (1.2) of the joint (1) takes place due to the wedged shape which one of the surfaces (1.2.1) of this body has, as well as to the deformation of the throttling neck (3). With this deformation the internal surface (1.2.2) of the second body (1.2) comes to abut upon the external surface of the pipe (4).

By increasing the supporting surface of the joint (1) in the pipe (4), the area is increased on which pressure from the joint (1) is applied against the aforementioned pipe (4) achieving a more secure seal. A greater deformation of the internal surface (1.2.2) of the joint (1) is achieved by increasing the closeness between the flange (2) and the coupling element (3) on increasing the tension in the tightening elements.

As has already been stated, the two bodies (1.1, 1.2) of the joint are connected through a throttling neck (1.3) which is deformed being flattened by applying pressure on the joint (1) and which allows the greater deformation of the internal face (1.2.2) of the second body of the joint.

It is precisely this throttling neck (1.3) which favours the tightening force being transformed into a greater pressure of the second body (1.2) against the surface of the pipe (4) by favouring the wedging effect.

Likewise, the pressure applied by the fluid, located between the main body (3) of the device and the pipe (4), contributes to the deformation of the joint (1) improving the fluid-tightness.

The essential nature of this invention is not altered by variations in materials, form, size and arrangement of the component elements, described in a non-restrictive manner, this being sufficient for an expert to proceed to its reproduction.

## Claims

1. - Fluid-tight joint of those which are mounted between a tightening flange (2) and the main body (3) of the device which constitutes the seal on the pipe (4) **characterized in that** it is configured in its section according to two bodies connected to each other by a throttling neck (1.3) where the first body (1.1) has a surface (1.1.1) supporting the flange (2) arranged essentially perpendicularly to the main axis and the second body (1.2) has an oblique internal face (1.2.1) for wedging by abuttal on the oblique face of the main body (3) of the device which by deformation produces the pressure of the internal face of this same second body (1.2) against the external surface of the tube (4), which wedging is favoured by the deformation of the throttling neck (1.3).

2. - Fluid-tight joint according to claim 1 **characterized in that** the body (1.1) has a supporting external surface (1.1.2) resting on an annular lip (2.1) of the flange (2) to prevent escape.
